# EUROPEAN PATENT APPLICATION

(11) **EP 4 059 809 A1**
(43) Date of publication of application: **21.09.2022**
(21) Application number: 19952888.6
(22) Date of filing: 13.11.2019
(51) Int. Cl.: B62B 1/18

(54) **ELECTRIC WHEELBARROW**

(71) Applicant: Techtronic Cordless GP, Anderson, SC 29621 (US)
(72) Inventor: LI, Dazheng, Dongguan, Guangdong 523960 (CN); LAM, Kwok Fan, Hong Kong (CN); ZHANG, Shengrong, Dongguan, Guangdong 523960 (CN)
(74) Representative: Novagraaf Group
(86) International application number: PCT/CN2019/117982
(87) International publication number: WO 2021/092790

(57) **Abstract**

An electric wheelbarrow comprises a main body portion (1), a power supply device (2) installed at the main body portion (1), a power device and a control device. The power supply device (2) and the control device are respectively connected to the power device. The main body portion (1) comprises a tray (11), a main body frame (12) bearing the tray (11), and a wheel (13) installed at the main body frame (12). The power device comprises a drive device (3), a transmission device (4) and a brake device (5).

## Description

### Technical Field

The present disclosure relates to the technical field of hand-propelled vehicles, and in particular, to an electric wheelbarrow.

### Background Art

Hand-propelled vehicles are common means of transportation. Compared with ordinary multi-wheeled hand-propelled vehicles, a wheelbarrow has a simple structure and a small size, and is therefore widely used in production and life, such as in the storage industry and construction industry. The pulling or pushing of a conventional wheelbarrow relies on manpower, resulting in high labor intensity and low working efficiency. As a result, an electric wheelbarrow came into being, which wheelbarrow is powered by a drive motor.

However, in a current electric wheelbarrow, the drive motor, a transmission device, etc. are all installed at a tray or a frame of the electric wheelbarrow, resulting in a complicated overall structure and relatively large size of the electric wheelbarrow.

### Summary

The present disclosure provides an electric wheelbarrow. The electric wheelbarrow comprises a main body portion, and a power supply device, a power device and a control device which are installed at the main body portion. The power supply device and the control device are separately connected to the power device.

Optionally, the main body portion comprises a tray, a main body frame for carrying the tray, and a wheel installed at the main body frame.

Optionally, the power device comprises a drive device, a transmission device, and a brake device.

Further, optionally, the drive device and the transmission device are disposed in the wheel, the drive device is connected to a hub assembly of the wheel, and the transmission device is connected to a rim of the wheel.

Further, optionally, the drive device comprises a hub motor installed in the wheel, and the hub motor is connected to the transmission device and the hub assembly.

Further, optionally, the hub motor comprises a stator and a rotor, the stator is connected to the hub assembly, and the rotor is connected to the transmission device.

Optionally, the transmission device is a gearbox.

Further, optionally, the gearbox is a planetary gearbox.

Further, optionally, the planetary gearbox comprises a sun gear, a planetary gear, a planet carrier and a ring gear. The sun gear is connected to the drive device, the sun gear meshes with the planetary gear, the planetary gear is installed at the planet carrier, the ring gear meshes with the planetary gear, and the ring gear is fixedly connected to the rim.

Optionally, the power supply device comprises an upper housing and a lower housing. The lower housing is fixedly installed at the main body portion, and the upper housing is detachably connected to the lower housing.

Further, optionally, a sealing ring is disposed between the lower housing and the upper housing.

Optionally, the control device comprises a controller for controlling the power device, and a switch device connected to the controller. The controller and the switch device are both disposed on the main body portion.

Further, optionally, the switch device comprises a power membrane switch for controlling the on or off of a power supply of the electric wheelbarrow, a brake device, a motor regulation switch for regulating the operation of the motor when the power supply is turned on, a direction adjustment membrane switch for controlling the electric wheelbarrow to move forward or backward, and a speed regulation membrane switch for regulating a movement speed of the electric wheelbarrow.

Further, optionally, the main body portion is provided with a handle, and the switch device is disposed on the handle.

Further, optionally, the power membrane switch is disposed on an end face of a first end of the handle, the brake device is disposed on an inner side of the first end, the motor regulation switch is disposed on an inner side of a second end of the handle, and the direction adjustment membrane switch and the speed regulation membrane switch are disposed on an end face of the second end.

### Brief Description of the Drawings

To illustrate the technical solutions of the present disclosure more clearly, the accompanying drawings required in some embodiments of the present disclosure will be briefly introduced below. As can be seen, the accompanying drawings in the following description show only some embodiments of the present disclosure, and a person of ordinary skill in the art can further obtain other accompanying drawings according to these accompanying drawings.
FIG. 1 is a perspective view of an electric wheelbarrow according to some embodiments of the present disclosure;
FIG. 2 is a front view of an electric wheelbarrow according to some embodiments of the present disclosure;
FIG. 3 is a rear view of an electric wheelbarrow according to some embodiments of the present disclosure;
FIG. 4 is a bottom view of an electric wheelbarrow according to some embodiments of the present disclosure;
FIG. 5 is a top view of an electric wheelbarrow according to some embodiments of the present disclosure;
FIG. 6 is a partial sectional view of an electric wheelbarrow according to some embodiments of the present disclosure;
FIG. 7 is a partial exploded view I of an electric wheelbarrow according to some embodiments of the present disclosure;
FIG. 8 is a partial exploded view II of an electric wheelbarrow according to some embodiments of the present disclosure;
FIG. 9 is a schematic structural diagram of a drive device of an electric wheelbarrow according to some embodiments of the present disclosure;
FIG. 10 is a schematic structural diagram of a transmission device of an electric wheelbarrow according to some embodiments of the present disclosure;
FIG. 11 is a partial enlarged structural view I of an electric wheelbarrow according to some embodiments of the present disclosure;
FIG. 12 is a partial enlarged structural view II of an electric wheelbarrow according to some embodiments of the present disclosure; and
FIG. 13 is a partial enlarged structural view III of an electric wheelbarrow according to some embodiments of the present disclosure.

Reference signs:
1 - Main body portion; 11 - tray; 12 - main body frame;
13 - wheel; 131 - hub assembly; 132 - rim;
133 - sealing cover; 14 - mounting base; 15 - fixing rib;
16 - fixed shaft; 17 - support frame; 18 - reinforcing structure;
19 - handle; 2 - power supply device; 21 - upper housing;
22 - lower housing; 3 - drive device; 31 - hub motor;
311 - stator; 312 - rotor; 313 - rotor shaft;
4 - transmission device; 41 - sun gear; 42 - planetary gear;
43 - planet carrier; 44 - ring gear; 5 - brake device;
51 - brake; 6 - bearing; 7 - switch device;
71 - power membrane switch; 72 - brake switch; 73 - motor regulation switch;
74 - direction adjustment membrane switch; and 75 - speed regulation membrane switch.

### Detailed Description of Embodiments

The technical solutions in some embodiments of the present disclosure are clearly and completely described below with reference to the accompanying drawings. As can be seen, the embodiments described are only some embodiments of the present disclosure rather than all embodiments. All the other embodiments obtained by a person of ordinary skill in the art on the basis of the embodiments provided in the present disclosure shall fall within the scope of protection of the present disclosure.

It should be noted in the description of the structure of a device or a component that the orientation or positional relationship indicated by the terms used, such as "upper", "lower", "front", "rear", "left", "right", "vertical", "horizontal", "top", "bottom", "inner" and "outer", is based on the orientation or positional relationship shown in the accompanying drawings, which is merely for the ease of description and simplification of the description, and is not intended to indicate or imply that the device or component referred to must have a particular orientation or be constructed and operated in a particular orientation. Therefore, this should not be construed as limiting the present disclosure.

An electric wheelbarrow provided in the present disclosure will be described below with reference to specific embodiments.

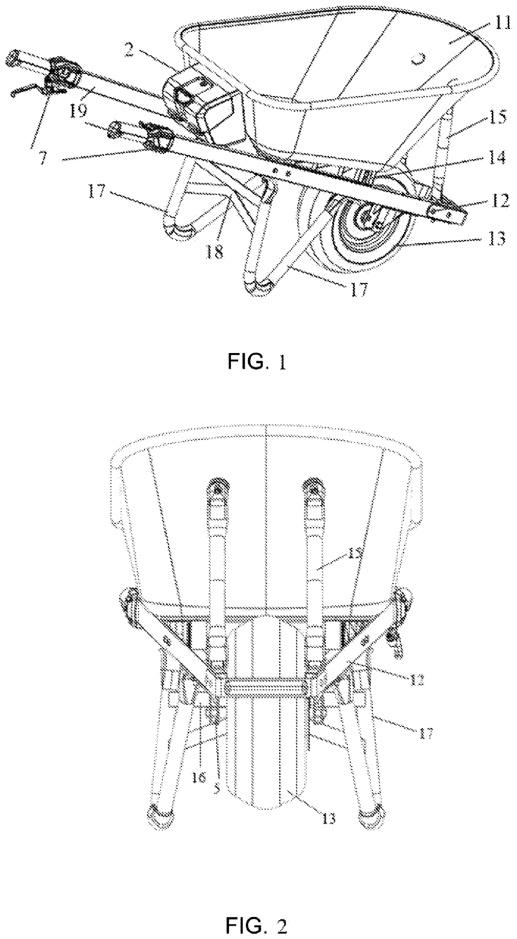

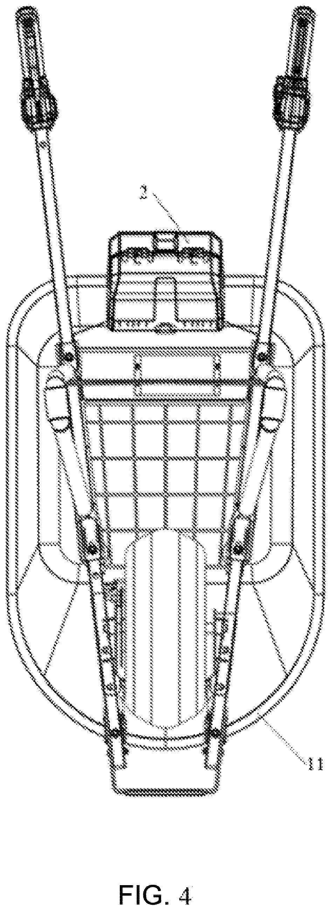

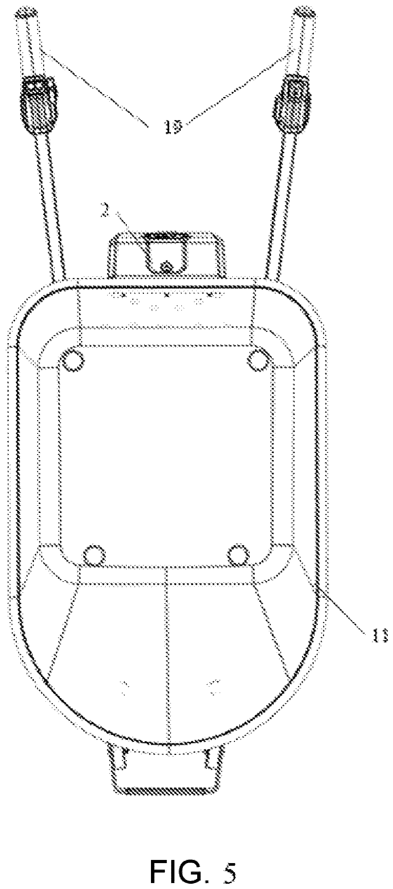

As shown in FIGS. 1 to 13, an embodiment of the present disclosure provides an electric wheelbarrow, comprising a main body portion 1, and a power supply device 2, a power device and a control device which are installed at the main body portion 1. The power supply device 2 and the control device are separately connected to the power device.

For example, as shown in FIGS. 1 to 5, in some embodiments of the present disclosure, the main body portion 1 comprises a tray 11, a main body frame 12 for carrying the tray 11, and a wheel 13 installed at the main body frame 12.

For example, as shown in FIGS. 1 to 5, in some embodiments of the present disclosure, the bottom of the tray 11 is installed above the main body frame 12 by means of a mounting base 14, and a front end of the tray 11 is further connected to a front end of the main body frame 12 via a fixing rib 15, so that the tray 11 is connected to the main body frame 12 more firmly, thereby making the overall structure of the electric wheelbarrow more stable. The wheel 13 is installed in the main body frame 12 below the tray 11 by means of a fixed shaft 16, and two parallel support frames 17 are provided below the main body frame 12. In a non-use state, a bent portion of each of the support frames 17 is in contact with the ground, and the two support frames 17 and the wheel 13 jointly support the electric wheelbarrow to stand on the ground or another working surface.

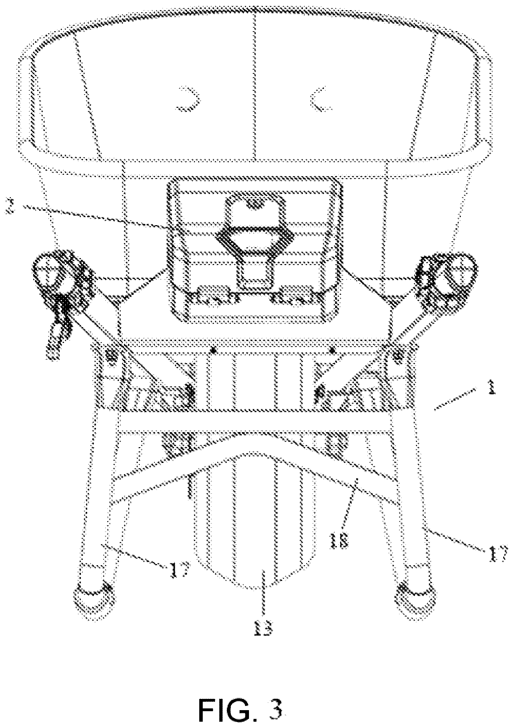

In addition, as shown in FIGS. 1 and 3, a reinforcing structure 18 is further disposed between the two support frames 17 to further improve the structural stability of the electric wheelbarrow. It is also possible that the bent portions of the two support frames 17 that are in contact with the ground are subjected to anti-sliding treatment to prevent the electric wheelbarrow from accidentally sliding when the electric wheelbarrow stands on the ground or another working surface.

In some embodiments of the present disclosure, the power device comprises a drive device 3, a transmission device 4, and a brake device 5.

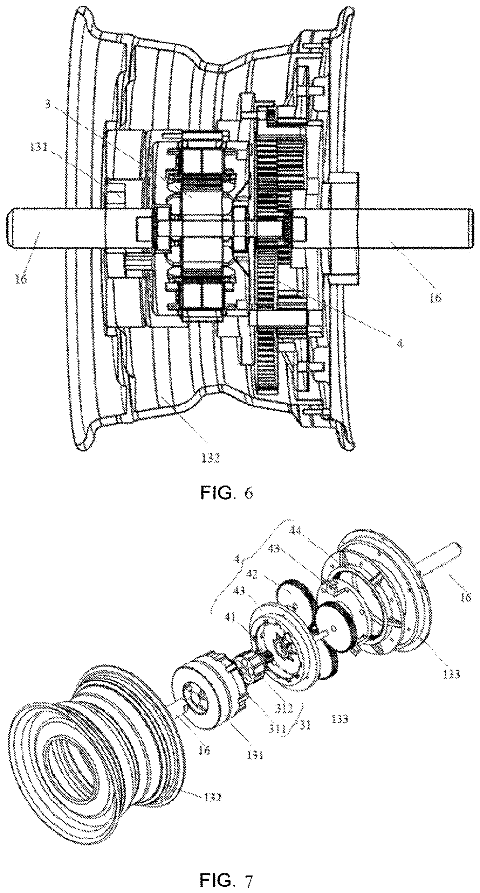

As shown in FIGS. 6 to 8, in some embodiments of the present disclosure, the drive device 3 and the transmission device 4 are both disposed in the wheel 13, the drive device 3 is connected to a hub assembly 131 of the wheel 13, and the transmission device 4 is connected to a rim 132 of the wheel 13. In this way, the drive device 3 and the transmission device 4 are both disposed in the wheel 13, which can simplify the overall structure of the electric wheelbarrow, reduce the size of the electric wheelbarrow and facilitate the application of the electric wheelbarrow in various narrow spaces.

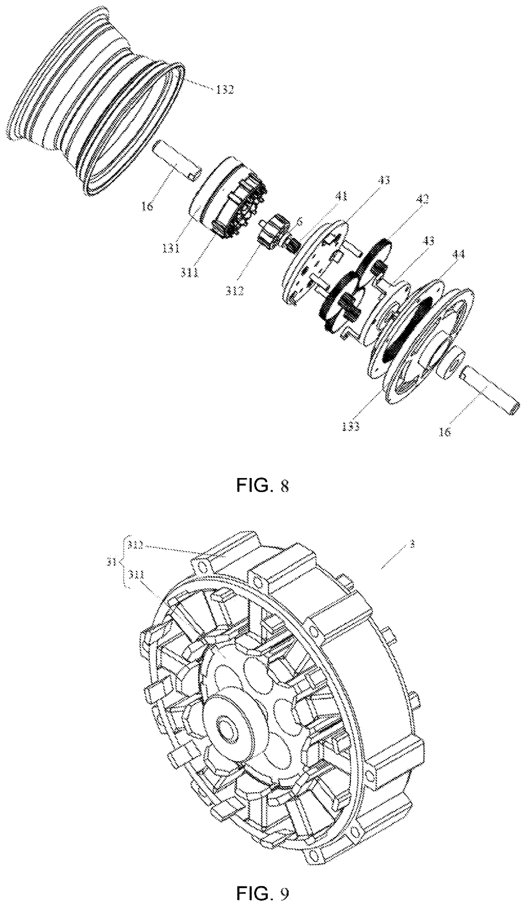

Optionally, as shown in FIGS. 6 to 9 (in FIG. 9, to show the structure of the drive device 3 more clearly, other irrelevant components are omitted), in some embodiments of the present disclosure, the drive device 3 comprises a hub motor 31 installed in the wheel 13, and the hub motor 31 is connected to the transmission device 4 and the hub assembly 131. For example, an outer side of the hub motor 31 may be connected to the hub assembly 131, and an inner side of the hub motor 31 is connected via a bearing 6 to the fixed shaft 16 passing through the hub assembly 131, thereby fixing the hub motor 31 in the wheel 13. An output end of the hub motor 31 is connected to the transmission device 4 via a bearing 6.

Further, optionally, as shown in FIGS. 6 to 9, the hub motor 31 comprises a stator 311 and a rotor 312. The rotor 312 is located in the stator 311, and an outer side of the stator 311 is connected to the hub assembly 131. One end of a rotor shaft 313 of the rotor 312 is connected to the fixed shaft 16 via a bearing 6, and the other end of the rotor shaft 313 is connected to the transmission device 4 via a bearing 6.

For example, as shown in FIGS. 6 to 8, in some embodiments of the present disclosure, the transmission device 4 is a gearbox.

Optionally, as shown in FIGS. 6 to 8, in some embodiments of the present disclosure, the gearbox is a planetary gearbox. Compared with an ordinary gearbox, the planetary gearbox has a compact size, performs transmission steadily, and has a large load-bearing capacity and a long service life, thereby further reducing the size of the electric wheelbarrow.

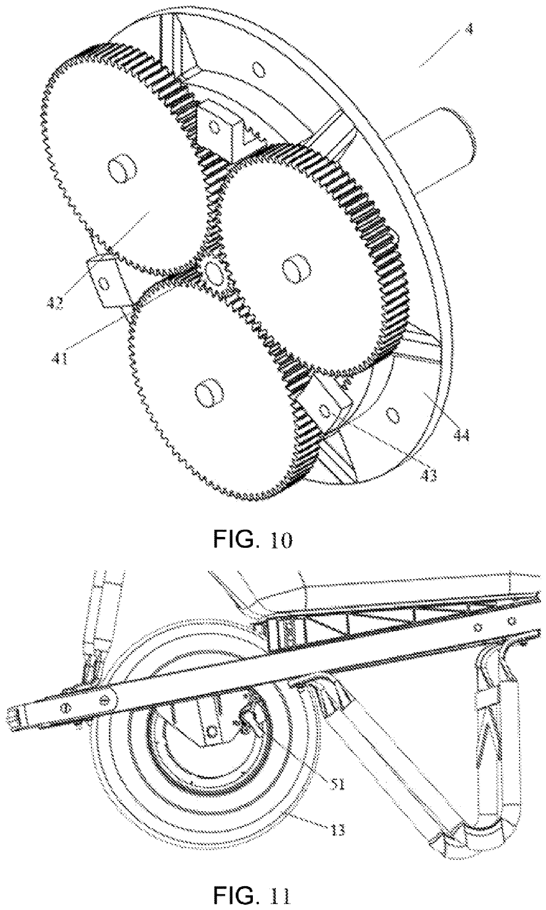

Further, optionally, as shown in FIGS. 6 to 8 and FIG. 10 (in FIG. 10, to show the structure of the planetary gearbox more clearly, other irrelevant components are omitted), the planetary gearbox comprises a sun gear 41 connected to the drive device, a planetary gear 42 meshing with the sun gear 41, a planet carrier 43 for mounting the planetary gear 42, and a ring gear 44 with an inner side meshing with the planetary gear 42. The ring gear 44 is fixedly connected to the rim 132. For example, the ring gear 44 may be fixedly connected to the rim 132 by means of being connected to a sealing cover 133 that is disposed on the wheel 13 and fixedly connected to the rim 132.

It can be seen from the foregoing structure that in some embodiments of the present disclosure, after electromagnetic torque of the hub motor 31 is increased by the planetary gearbox due to deceleration, power is transmitted to the rim 132 to drive the wheel 13. Specifically, the hub motor 31 transmits power to the sun gear 41 through the rotor shaft 313 connected to the sun gear 41, such that the sun gear 41 rotates. The sun gear 41 drives the planetary gear 42 meshing therewith to rotate, the planetary gear 42 drives the ring gear 44 meshing therewith to rotate, and the ring gear 44 drives the rim 132 fixedly connected thereto to rotate, thereby driving the wheel 13.

As shown in FIGS. 2 and 11, in some embodiments of the present disclosure, the brake device 5 comprises a brake wire (not shown) connected to the control device, a brake 51 which is connected to the brake wire and installed at the wheel 13, and a brake disc (not shown) which is connected to the brake 51 and acts on the wheel. During the movement of the electric wheelbarrow, the brake wire can be pulled by the control device, and the brake wire drives the brake 51 to act on the brake disc, thereby braking the wheel 13.

In some embodiments of the present disclosure, as shown in FIGS. 1 to 5, the power supply device 2 is disposed behind the tray 11, and the power supply device 2 is connected to the drive device 3 to provide electric energy for the hub motor 31 in the drive device 3.

For example, in some embodiments of the present disclosure, the power supply device 2 may be a waterproof battery pack disposed on the main body portion. In addition, an external plug may be provided on the power supply device 2, to charge the battery pack by an external power supply.

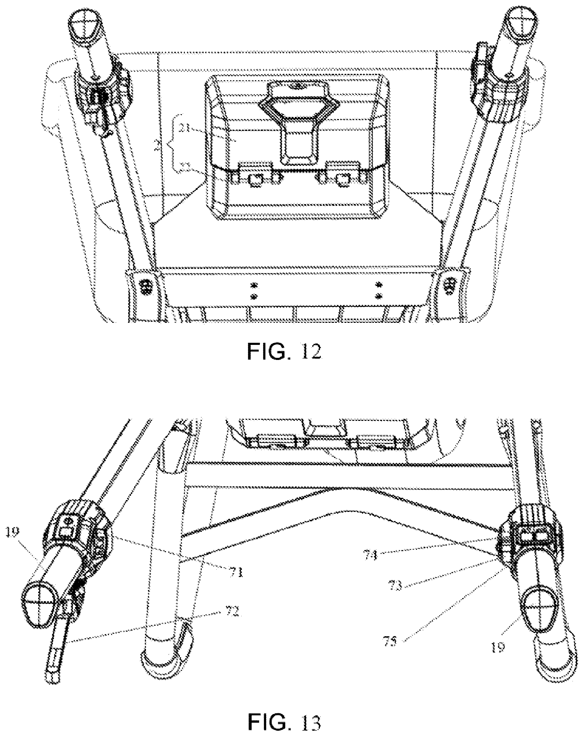

Further, optionally, as shown in FIG. 12, the power supply device 2 comprises an upper housing 21 and a lower housing 22 that are detachably connected to each other. Only the lower housing 22 is fixedly installed at the main body portion 1. For example, the lower housing may be fixedly installed at the tray 11. A battery in the power supply device 2 is disposed in a cavity formed by the upper housing 21 and the lower housing 22, and the battery may be a storage battery or the like. Therefore, when the battery in the power supply device 2 needs to be repaired or replaced, staff only need to open the upper housing 21 to repair or replace the battery without the need for disassembling the entire power supply device 2.

Preferably, a sealing ring is disposed between the lower housing 22 and the upper housing 21 to prevent rainwater and the like from entering the cavity for the power supply device 2 and damaging the battery. For example, the sealing ring may be a rubber sealing ring made of a soft material to further improve the sealing performance of the power supply device 2.

In some embodiments of the present disclosure, the control device comprises a controller for controlling the power device, and a switch device 7 connected to the controller. The controller and the switch device 7 are both disposed on the main body portion 1, for example, on the main body frame 12 of the main body portion 1. The switch device 7 may provide a power on/off function of turning on or off a power supply of the electric wheelbarrow, a function of adjusting the operation of the hub motor 31 to adjust a rotation speed of the hub motor 31, and a function of activating or deactivating the brake device 5. In addition, the switch device 7 may be further configured to provide a function of adjusting a movement speed and/or a movement direction, so as to adjust a movement speed and direction of the electric wheelbarrow.

When the electric wheelbarrow is in use, the power supply and the drive device 3 can be activated through the switch device 7 and the controller, power output by the hub motor 31 in the drive device 3 can be transmitted to the rim 132 through the transmission device 4 to drive the wheel 13, so as to drive the electric wheelbarrow to move, and drive the electric wheelbarrow to move to a designated position. After the designated position is reached, brake kinetic energy is activated through the switch device 7, that is, the brake wire is pulled by the switch device 7, and the brake wire drives the brake 51 to act on the brake disc, thereby implementing the braking of the wheel 13 and making the electric trolley stop moving.

It should be noted that the controller may include a processor for supporting the electric movement of the electric wheelbarrow performed by the control device, a storage unit for storing program codes of the control device, etc. For example, the processor may be a central processing unit (CPU), or may be other general-purpose processors, a digital signal processor (DSP), an application-specific integrated circuit (ASIC), a field-programmable gate array (FPGA) or other programmable logic devices, and the like. The general-purpose processor may be a microprocessor or any conventional processor or the like.

Optionally, as shown in FIG. 13, in some embodiments of the present disclosure, the switch device 7 comprises a power membrane switch 71 for controlling the on or off of a power supply of the electric wheelbarrow, a brake switch 72, a motor regulation switch 73 for regulating the operation of the motor when the power supply is turned on, a direction adjustment membrane switch 74 for controlling the electric wheelbarrow to move forward or backward, and a speed regulation membrane switch 75 for regulating a movement speed of the electric wheelbarrow.

For example, when it is necessary to switch the electric wheelbarrow into an electric movement mode, an operator can turn on the power membrane switch 71 and the motor regulation switch 73 to activate the hub motor 31. The power output by the hub motor 31 can be transmitted to the rim 132 through the transmission device 4, and then drives the wheel 13 to move the electric wheelbarrow.

For example, during the electric movement of the electric wheelbarrow, the user can adjust the movement speed of the electric wheelbarrow through the motor regulation switch 73 and the speed regulation membrane switch 75 as required. In addition, the direction adjustment membrane switch 74 may also be used to make the electric wheelbarrow move forward or backward.

When the electric wheelbarrow reaches a target position and the electric wheelbarrow in the electric movement mode needs to be stopped, the user can press the brake switch 72 to pull the brake wire, and the brake wire drives the brake 51 to act on the brake disc, thereby braking the wheel 13, so that the electric wheelbarrow stops moving. After the power supply is turned off by means of the power membrane switch 71, the user can safely unload goods from the electric wheelbarrow.

Further, optionally, as shown in FIG. 1, the main body frame 12 of the main body portion 1 is provided with a handle 19, and the switch device 7 is disposed on the handle 19 to facilitate the operation by the staff as required during the process of using the electric wheelbarrow.

Preferably, the switch device 7 may be disposed on a grip portion of the handle 19 to further facilitate the operation by the staff.

For example, as shown in FIG. 13, in some embodiments of the present disclosure, the power membrane switch 71 is disposed on an end face of a first end of the handle 19, the brake switch 72 is disposed on an inner side of the first end, the motor regulation switch 73 is disposed on an inner side of a second end of the handle 19, and the direction adjustment membrane switch 74 and the speed regulation membrane switch 75 are disposed on an end face of the second end. In this way, in the process of using the electric wheelbarrow, the staff can turn on or off each switch as required, facilitating the operation.

In the description of the foregoing implementations, specific features, structures, materials or characteristics may be combined in any one or more embodiments or examples in a suitable way.

The foregoing description is only for preferred implementations of the present disclosure, but the scope of protection of the present disclosure is not limited thereto, and variations and replacements that can be conceived within the technical scope disclosed in the present disclosure by those skilled in the art should fall within the scope of protection of the present disclosure. Therefore, the scope of protection of the present disclosure should be subject to the scope of protection of the claims.

## Claims

1. An electric wheelbarrow, comprising a main body portion (1), and a power supply device (2), a power device and a control device which are installed at the main body portion (1), wherein the power supply device (2) and the control device are separately connected to the power device.

2. The electric wheelbarrow as claimed in claim 1, wherein the main body portion (1) comprises a tray (11), a main body frame (12) for carrying the tray (11), and a wheel (13) installed at the main body frame (12).

3. The electric wheelbarrow as claimed in claim 1, wherein the power device comprises a drive device (3), a transmission device (4), and a brake device (5).

4. The electric wheelbarrow as claimed in claim 3, wherein the drive device (3) and the transmission device (4) are disposed in the wheel (13), the drive device (3) is connected to a hub assembly (131) of the wheel, and the transmission device (4) is connected to a rim (132) of the wheel.

5. The electric wheelbarrow as claimed in claim 4, wherein the drive device (3) comprises a hub motor (31) installed in the wheel (13), and the hub motor (31) is connected to the transmission device (4) and the hub assembly (131).

6. The electric wheelbarrow as claimed in claim 5, wherein the hub motor (31) comprises a stator (311) and a rotor (312), the stator (311) is connected to the hub assembly (131), and the rotor (312) is connected to the transmission device (4).

7. The electric wheelbarrow as claimed in claim 4, wherein the transmission device (4) is a gearbox.

8. The electric wheelbarrow as claimed in claim 7, wherein the gearbox is a planetary gearbox.

9. The electric wheelbarrow as claimed in claim 8, wherein the planetary gearbox comprises a sun gear (41), a planetary gear (42), a planet carrier (43) and a ring gear (44), the sun gear (41) is connected to the drive device (3), the sun gear (41) meshes with the planetary gear (42), the planetary gear (42) is installed at the planet carrier (43), the ring gear (44) meshes with the planetary gear (42), and the ring gear (44) is fixedly connected to the rim (132).

10. The electric wheelbarrow as claimed in claim 1, wherein the power supply device (2) comprises an upper housing (21) and a lower housing (22), the lower housing (22) is fixedly installed at the main body portion (1), and the upper housing (21) is detachably connected to the lower housing (22).

11. The electric wheelbarrow as claimed in claim 10, wherein a sealing ring is disposed between the lower housing (22) and the upper housing (21).

12. The electric wheelbarrow as claimed in claim 1, wherein the control device comprises a controller for controlling the power device, and a switch device (7) connected to the controller, and the controller and the switch device (7) are both disposed on the main body portion (1).

13. The electric wheelbarrow as claimed in claim 12, wherein the switch device (7) comprises a power membrane switch (71) for controlling the on or off of a power supply of the electric wheelbarrow, a brake switch (72), a motor regulation switch (73) for regulating the operation of the motor when the power supply is turned on, a direction adjustment membrane switch (74) for controlling the electric wheelbarrow to move forward or backward, and a speed regulation membrane switch (75) for regulating a movement speed of the electric wheelbarrow.

14. The electric wheelbarrow as claimed in claim 13, wherein the main body portion (1) is provided with a handle (19), and the switch device (7) is disposed on the handle (19).

15. The electric wheelbarrow as claimed in claim 14, wherein the power membrane switch (71) is disposed on an end face of a first end of the handle (19), the brake switch (72) is disposed on an inner side of the first end, the motor regulation switch (73) is disposed on an inner side of a second end of the handle (19), and the direction adjustment membrane switch (74) and the speed regulation membrane switch (75) are disposed on an end face of the second end.
